# FASCICULE DE BREVET EUROPEEN

(11) **EP 4 455 021 B1**
(45) Date de publication et mention de la délivrance du brevet: **29.10.2025**
(21) Numéro de dépôt: 24170269.5
(22) Date de dépôt: 15.04.2024
(51) Int. Cl.: B64D 37/30, B64D 37/32, B64D 37/00

(54) **AÉRONEF COMPRENANT AU MOINS UN DISPOSITIF D'ALIMENTATION EN HYDROGÈNE ÉQUIPÉ D'AU MOINS UN SYSTÈME D'ÉVACUATION DE GAZ EN CAS DE FUITE**
FLUGZEUG MIT MINDESTENS EINER WASSERSTOFFVERSORGUNGSVORRICHTUNG MIT MINDESTENS EINEM GASABFÜHRUNGSSYSTEM IM FALLE EINES LECKS
AIRCRAFT COMPRISING AT LEAST ONE HYDROGEN SUPPLY DEVICE PROVIDED WITH AT LEAST ONE GAS DISCHARGE SYSTEM IN CASE OF A LEAK

(30) Priorité: 26.04.2023 FR 2304181
(43) Date de publication de la demande: 30.10.2024
(73) Titulaire: AIRBUS OPERATIONS (S.A.S.), 31060 Toulouse (FR)
(72) Inventeur: MILLIERE, Jérôme, 31060 TOULOUSE (FR); CZAPLA, Lionel, 31060 TOULOUSE (FR); JOUBERT, Romain, 31060 TOULOUSE (FR)
(74) Mandataire: Fantin, Laurent

(56) Documents cités:
- US-A1- 2023 043 843
- US-A1- 2023 044 493
- US-A1- 2023 086 167

## Description

La présente demande se rapporte à un aéronef comprenant au moins un dispositif d'alimentation en hydrogène équipé d'au moins un système d'évacuation de gaz en cas de fuite.

Selon un mode de réalisation, un aéronef fonctionnant à l'hydrogène comprend au moins un réservoir d'hydrogène, au moins une motorisation utilisant de l'hydrogène, comme des turboréacteurs à hydrogène ou des moteurs électriques alimentés par des piles à combustible par exemple, ainsi que, pour chaque motorisation, au moins un dispositif d'alimentation en hydrogène reliant le réservoir d'hydrogène et la motorisation.

Ce dispositif d'alimentation en hydrogène comprend une pompe à haute pression pour mettre en pression l'hydrogène, un échangeur thermique configuré pour réchauffer l'hydrogène ainsi que différentes canalisations d'hydrogène pour relier le réservoir d'hydrogène, la pompe, l'échangeur thermique et la motorisation.

Selon un mode de réalisation, l'hydrogène est acheminé dans des canalisations à double peau comprenant chacune un conduit externe et un conduit interne positionné dans le conduit externe. En fonctionnement, la zone intérieure entre les conduits interne et externe présente un niveau de vide élevé ou contient un gaz inerte pour isoler l'hydrogène canalisé dans le conduit interne et l'air situé à l'extérieur du conduit externe. Comme illustré dans le document FR3127543, chaque canalisation d'hydrogène comprend au moins un capteur de pression configuré pour mesurer une pression dans la zone intérieure, une augmentation de pression dans la zone intérieure correspondant à une probable fuite d'hydrogène ou d'oxygène, ainsi qu'un capteur d'hydrogène configuré pour détecter la présence d'hydrogène dans la zone intérieure.

Le dispositif d'alimentation en hydrogène comprend également au moins un contenant qui sépare, de manière étanche au gaz, une zone intérieure et une zone extérieure, la pompe à haute pression et/ou l'échangeur thermique étant située(s) dans la zone intérieure du contenant. Ce dernier présente au moins un capteur d'hydrogène configuré pour détecter la présence d'hydrogène dans la zone intérieure ou un capteur de pression configuré pour mesurer une pression dans la zone intérieure, une augmentation de pression dans la zone intérieure pouvant être représentative d'une fuite d'hydrogène ou d'oxygène. En fonctionnement, la zone intérieure contient un gaz inerte ou présente un niveau de vide élevé. Ainsi, en cas de fuite d'hydrogène dans la zone intérieure, l'hydrogène n'est pas en contact avec l'air ambiant situé dans la zone extérieure du contenant.

Le dispositif d'alimentation en hydrogène comprend également plusieurs vannes d'arrêt permettant de le segmenter en plusieurs tronçons.

Grâce aux capteurs d'hydrogène ou aux capteurs de pression, il est possible de détecter une fuite d'hydrogène dans une zone intérieure d'un contenant ou d'une canalisation d'un tronçon et d'isoler ce dernier du reste du dispositif d'alimentation en hydrogène en commandant la fermeture des vannes d'arrêt positionnées aux extrémités du tronçon au niveau duquel la fuite est détectée.

Cette solution permet d'obtenir un dispositif d'alimentation en hydrogène sûr dans la mesure où le tronçon qui présente une fuite d'hydrogène n'est plus alimenté en hydrogène et l'hydrogène ayant fui est contenu dans un contenant et/ou dans un conduit externe d'une canalisation et n'est pas en contact avec l'air ambiant.

US 2023/043843 A1 divulgue un aéronef comprenant au moins un dispositif d'alimentation en hydrogène ainsi qu'au moins un contenant étanche dans lequel est positionné au moins un équipement dudit dispositif d'alimentation en hydrogène.

US 2023/044493 A1 divulgue un aéronef qui comprend plusieurs moteurs à hélice fonctionnant à l'hydrogène ainsi qu'au moins un dispositif d'alimentation en hydrogène configuré pour alimenter les moteurs. Ce dispositif d'alimentation en hydrogène comprend un réservoir d'hydrogène positionné dans le fuselage, une pompe haute pression pour mettre en pression l'hydrogène, un échangeur thermique configuré pour réchauffer l'hydrogène qui passe de l'état liquide à l'état gazeux ainsi que différents conduits pour relier le réservoir d'hydrogène, la pompe, l'échangeur thermique et le moteur, les conduits étant des tuyaux à double peau pour empêcher toute fuite d'hydrogène.

La présente invention vise à renforcer la sécurité d'un dispositif d'alimentation en hydrogène d'un aéronef.

A cet effet, l'invention a pour objet un aéronef comprenant:
- au moins une structure secondaire séparant une zone interne et une zone externe,
- au moins une motorisation utilisant de l'hydrogène située dans la zone interne de la structure secondaire,
- au moins un réservoir d'hydrogène, et
- au moins un dispositif d'alimentation en hydrogène reliant le réservoir d'hydrogène et la motorisation,
le dispositif d'alimentation en hydrogène comprenant :
- au moins un tronçon comportant au moins une enceinte externe parmi au moins un conduit externe et au moins un contenant,
- des première et deuxième vannes d'arrêt configurées pour isoler ledit tronçon en cas de fuite,
- au moins un élément interne situé dans l'enceinte externe et canalisant l'hydrogène parmi notamment au moins un conduit interne, au moins une pompe, au moins un échangeur thermique et au moins une vanne d'arrêt, au moins une zone intérieure étant située entre l'élément interne et l'enceinte externe,
- au moins un système d'aération configuré pour évacuer un gaz présent dans la zone intérieure vers la zone externe de la structure secondaire,
- le contenant délimitant la zone intérieure et comportant un corps tubulaire cylindrique, et
- au moins un système d'injection d'un gaz inerte dans la zone intérieure comprenant au moins:
   o un réservoir de gaz inerte,
   o un conduit d'injection reliant le réservoir de gaz inerte et la zone intérieure,
   o un système de régulation pour contrôler un écoulement du gaz inerte dans le conduit d'injection, et
   o un diffuseur relié au réservoir de gaz inerte, positionné dans le contenant et sensiblement coaxial au corps tubulaire cylindrique.

Le système d'aération permet d'évacuer l'hydrogène présent dans la zone intérieure en cas de fuite afin de réduire sa concentration. Par conséquent, même si le contenant ou le conduit externe délimitant la zone intérieure dans laquelle l'hydrogène a fui en raison d'une première fuite n'est plus étanche et fuit, les risques d'incidents en raison d'une deuxième fuite d'hydrogène dans la zone interne de la structure secondaire sont réduits.

Selon une autre caractéristique, le système d'aération comprend au moins un conduit d'aération qui présente au moins une entrée débouchant dans la zone intérieure et une sortie débouchant dans la zone externe de la structure secondaire ainsi qu'au moins une vanne d'aération configurée pour occuper un état ouvert dans lequel la vanne d'aération permet à un gaz de sortir de la zone intérieure et un état fermé dans lequel elle empêche un gaz de sortir de ladite chambre intérieure.

Selon un mode de réalisation, la vanne d'aération est une vanne d'aération autonome configurée pour changer d'état de manière autonome et occuper un état fermé lorsque la zone intérieure présente une pression inférieure à un seuil donné et un état ouvert lorsque la zone intérieure présente une pression supérieure ou égale au seuil donné.

Selon un mode de réalisation, la vanne d'aération est une vanne d'aération contrôlable par un élément distant.

Selon une autre caractéristique, le dispositif d'alimentation en hydrogène comprend :
- au moins une canalisation à double peau comportant un conduit interne, un conduit externe positionné autour du conduit interne et une zone intérieure située entre les conduits interne et externe,
- au moins un contenant délimitant une zone intérieure et dans lequel est positionné au moins un élément interne.

En complément, le système d'aération comprend une entrée, débouchant dans la zone intérieure de chaque canalisation à double peau, au niveau de laquelle est positionnée une vanne d'aération autonome ainsi que des première et deuxième entrées débouchant dans la zone intérieure de chaque contenant, une vanne d'aération autonome étant positionnée au niveau de la première entrée, une vanne d'aération contrôlable étant positionnée au niveau de la deuxième entrée.

Selon une autre caractéristique, le système d'aération comprend au moins un extracteur positionné dans le conduit d'aération et configuré pour générer un flux de gaz en direction de la sortie.

Selon une autre caractéristique, le système de régulation comporte au moins une vanne pilotée agencée sur le conduit d'injection et configurée pour autoriser l'écoulement du gaz inerte dans le conduit d'injection depuis le réservoir de gaz inerte.

Selon une autre caractéristique, le diffuseur comporte un tube annulaire relié au réservoir de gaz inerte, positionné dans le contenant et sensiblement coaxial au corps tubulaire cylindrique, ainsi que plusieurs injecteurs répartis sur la circonférence du tube annulaire.

Selon une configuration, les injecteurs sont configurés pour injecter le gaz inerte selon des directions formant un angle donné avec l'axe de révolution du tube annulaire de manière à obtenir un flux tourbillonnant autour de l'axe de révolution du tube annulaire, à l'intérieur du contenant.

Selon une autre configuration, les injecteurs sont configurés pour injecter le gaz inerte selon une direction parallèle à l'axe de révolution du tube annulaire.

Selon une autre configuration, le dispositif d'alimentation en hydrogène comprend un contenant délimitant la zone intérieure et comportant un corps tubulaire cylindrique ; le système d'injection comprenant au moins un diffuseur qui comporte un corps de forme générale conique relié au réservoir de gaz inerte, positionné dans le contenant et sensiblement coaxial au corps tubulaire cylindrique, ainsi que plusieurs ailettes réparties sur la circonférence du corps.

Selon une autre caractéristique, le dispositif d'alimentation en hydrogène comprend au moins un conduit de surpression qui présente une première extrémité débouchant dans un conduit interne canalisant l'hydrogène et une deuxième extrémité débouchant dans le conduit d'aération, ainsi qu'une vanne de surpression positionnée au niveau du conduit de surpression et configurée pour occuper un état bloqué lorsque l'hydrogène dans le conduit interne présente une pression inférieure ou égale au seuil donné ainsi qu'un état passant lorsque l'hydrogène dans le conduit interne présente une pression supérieure à un seuil donné.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef,
- La figure 2 est une représentation schématique d'un réservoir d'hydrogène, d'un ensemble de propulsion et d'un dispositif d'alimentation en hydrogène illustrant un mode de réalisation de l'invention,
- La figure 3 est une représentation schématique d'un dispositif d'alimentation en hydrogène illustrant un mode de réalisation de l'invention,
- La figure 4 est une représentation schématique d'un réservoir d'hydrogène, d'un ensemble de propulsion et d'un dispositif d'alimentation en hydrogène illustrant un mode de réalisation de l'invention,
- La figure 5 est une représentation schématique d'un réservoir d'hydrogène, d'un ensemble de propulsion et d'un dispositif d'alimentation en hydrogène illustrant un autre mode de réalisation de l'invention,
- La figure 6 est une vue en perspective d'une partie d'un ensemble de propulsion illustrant un mode de réalisation de l'invention,
- La figure 7 est une vue en perspective d'une partie d'un dispositif d'alimentation en hydrogène illustrant un mode de réalisation de l'invention,
- La figure 8 est une vue en perspective d'une partie d'un dispositif d'alimentation en hydrogène illustrant un autre mode de réalisation de l'invention,
- La figure 9 est une vue en perspective d'un contenant d'un dispositif d'alimentation en hydrogène illustrant un mode de réalisation de l'invention,
- La figure 10 est une vue en perspective d'un diffuseur d'un système d'injection d'un gaz inerte illustrant un mode de réalisation de l'invention,
- La figure 11 est une vue en perspective d'un diffuseur d'un système d'injection d'un gaz inerte illustrant un autre mode de réalisation de l'invention,
- La figure 12 est une vue de face d'un diffuseur d'un système d'injection d'un gaz inerte illustrant un autre mode de réalisation de l'invention, et
- La figure 13 est une vue de côté d'un diffuseur d'un système d'injection d'un gaz inerte illustrant un autre mode de réalisation de l'invention.

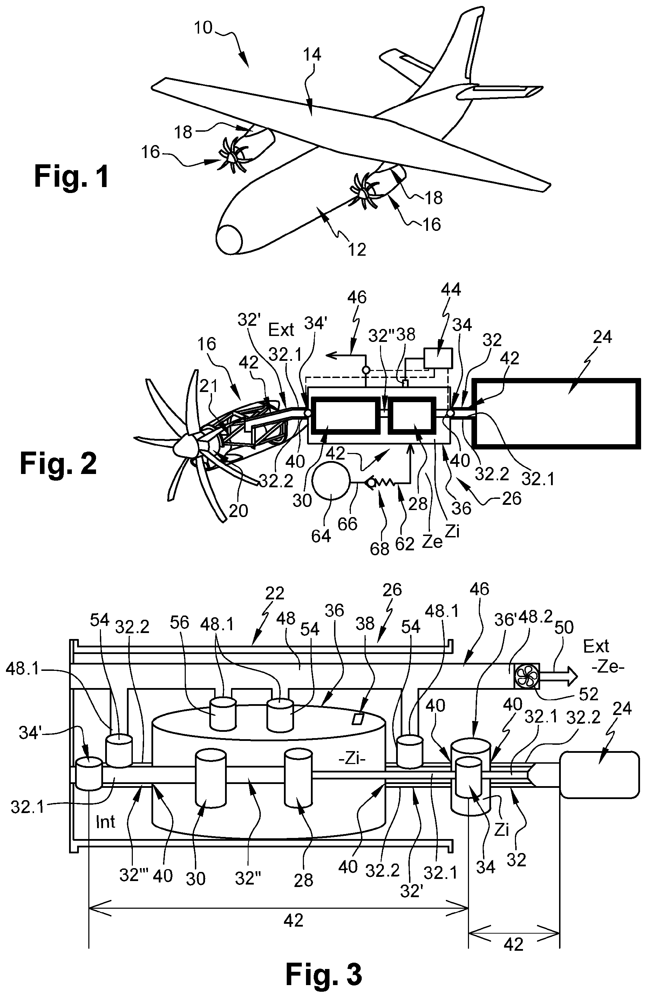

Selon un mode de réalisation visible sur la figure 1, un aéronef 10 comprend un fuselage 12, une voilure 14 ainsi que des ensembles de propulsion 16 positionnés sous la voilure 14 et reliés chacun à cette dernière par un mât 18.

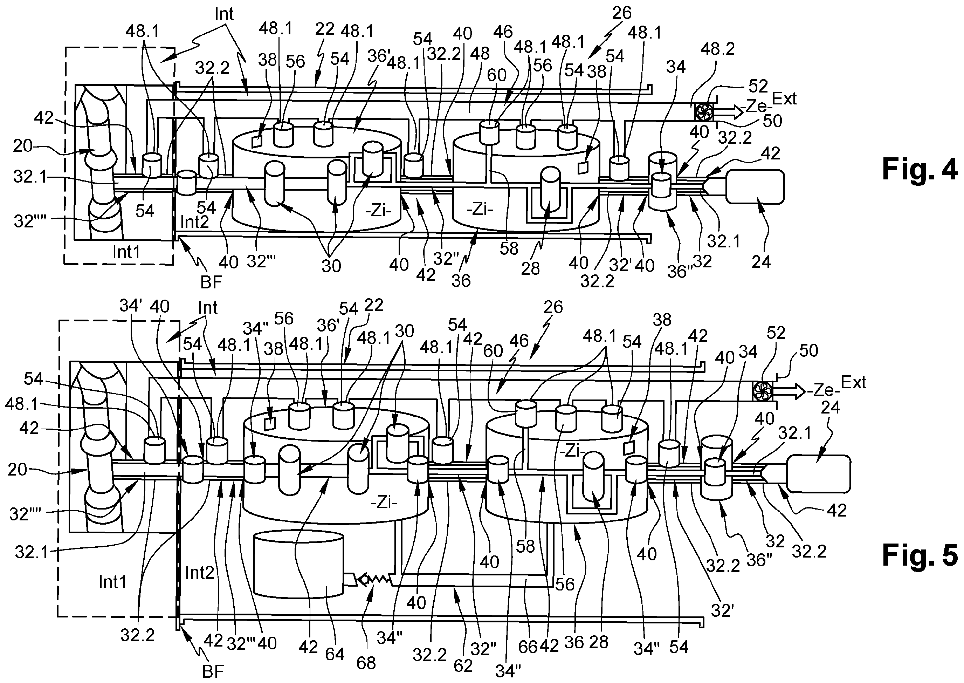

Comme illustré sur la figure 2, l'ensemble de propulsion 16 comprend une motorisation 20 utilisant de l'hydrogène, comme un turboréacteur à hydrogène ou un moteur électrique alimenté par des piles à combustible par exemple. L'ensemble de propulsion 16 comprend également une structure primaire 21 supportant la motorisation 20 ainsi qu'une structure secondaire 22 qui forme un carénage et sépare une zone interne Int et une zone externe Ext (visibles sur les figures 4 et 5), la structure primaire 21 et la motorisation 20 étant situées dans la zone interne Int. Selon une configuration, cette dernière comprend une barrière feu BF séparant la zone interne Int en une première zone interne Int1 (appelée zone feu) contenant la motorisation 20 et une deuxième zone interne Int2.

L'aéronef 10 comprend au moins un réservoir d'hydrogène 24 positionné dans le fuselage 12 et/ou la voilure 14 ainsi que, pour chaque ensemble de propulsion 16, au moins un dispositif d'alimentation en hydrogène 26 reliant le réservoir d'hydrogène 24 et la motorisation 20. Le dispositif d'alimentation en hydrogène 26 est positionné au moins en partie dans la zone interne Int de la structure secondaire 22.

Selon un mode de réalisation visible sur la figure 2, le dispositif d'alimentation en hydrogène 26 comprend au moins une pompe 28 pour mettre en pression l'hydrogène, au moins un échangeur thermique 30 configuré pour réchauffer l'hydrogène ainsi que des canalisations 32 reliant le réservoir d'hydrogène 24, la pompe 28, l'échangeur thermique 30 et la motorisation 20. Le dispositif d'alimentation en hydrogène 26 comprend des vannes d'arrêt 34 chacune configurées chacune pour occuper alternativement un état fermé et un état ouvert. Le dispositif d'alimentation en hydrogène 26 comprend également au moins un contenant 36 séparant, de manière étanche au gaz, une zone intérieure Zi et une zone extérieure, au moins un élément interne positionné dans la zone intérieure Zi parmi notamment au moins une pompe 28, au moine un échangeur thermique 30, au moins une canalisation 32 et au moins une vanne d'arrêt 34.

Selon une configuration, au moins un contenant 36 comprend au moins un capteur 38 configuré pour détecter une fuite d'hydrogène dans la zone intérieure Zi. Le capteur 38 peut être un capteur d'hydrogène configuré pour détecter une présence d'hydrogène dans la zone intérieure Zi ou un capteur de pression configuré pour détecter une augmentation de pression dans la zone intérieure Zi correspondant à une probable fuite d'hydrogène ou un capteur configuré pour détecter l'activation d'un système d'évacuation de la surpression du contenant 36. La zone intérieure Zi contient un gaz inerte, comme de l'hélium ou de l'azote, et/ou présente un niveau de vide élevé.

Selon une configuration, au moins une canalisation 32 est une canalisation à double peau et comprend un conduit interne 32.1, un conduit externe 32.2 positionné autour du conduit interne 32.1 ainsi qu'une zone intérieure Zi entre les conduits interne et externe 32.1, 32.2. Selon une configuration, la zone intérieure Zi prévue entre les conduits interne et externe 32.1, 32.2 contient un gaz inerte, comme de l'hélium ou de l'azote par exemple, ou présente un niveau de vide élevé. Au moins une canalisation 32 comprend au moins un capteur configuré pour détecter une fuite d'hydrogène dans la zone intérieure Zi. Ce capteur peut être un capteur d'hydrogène configuré pour détecter une présence d'hydrogène dans la zone intérieure Zi prévue entre les conduits interne et externe 32.1, 32.2 ou un capteur de pression configuré pour détecter une augmentation de pression dans la zone intérieure Zi prévue entre les conduits interne et externe 32.1, 32.2 correspondant à une probable fuite d'hydrogène ou un capteur configuré pour détecter l'activation d'un système d'évacuation de la surpression de la canalisation 32.

Selon un agencement, une canalisation 32 comprend une première partie située dans la zone intérieure Zi d'un contenant 36 ainsi qu'une deuxième partie située dans la zone extérieure du contenant 36. La première partie de la canalisation peut ne comprendre qu'un unique conduit interne 32.1. La deuxième partie de la canalisation 32 est une canalisation à double peau. En complément, le contenant 36 comprend un orifice pour permettre au conduit interne 32.1 de la canalisation 32 de traverser le contenant ainsi qu'un système de raccordement 40 reliant le conduit externe 32.2 et le contenant 36 de manière étanche au gaz.

Selon un mode de réalisation visible sur la figure 2, le dispositif d'alimentation en hydrogène 26 comprend un contenant 36 dans lequel sont positionnés la pompe 28 et l'échangeur thermique 30, une première canalisation 32 reliant le réservoir d'hydrogène 24 et la pompe 28, une deuxième canalisation 32' reliant l'échangeur thermique 30 et la motorisation 20 ainsi qu'une troisième canalisation 32" reliant la pompe 28 et l'échangeur thermique 30. La première canalisation 32 comporte un conduit externe 32.2 relié au contenant 36 par un système de raccordement 40 étanche au gaz au niveau duquel est positionnée une première vanne d'arrêt 34. La deuxième canalisation 32' comporte un conduit externe 32.2 relié au contenant 36 par un système de raccordement 40 au niveau duquel est positionnée une deuxième vanne d'arrêt 34'.

Selon un autre mode de réalisation visible sur la figure 3, le dispositif d'alimentation en hydrogène 26 comprend un premier contenant 36 dans lequel sont positionnés la pompe 28 et l'échangeur thermique 30, un deuxième contenant 36' dans lequel est positionnée une première vanne d'arrêt 34, une première canalisation 32 reliant le réservoir d'hydrogène 24 et la première vanne d'arrêt 34, une deuxième canalisation 32' reliant la première vanne d'arrêt 34 et la pompe 28, une troisième canalisation 32" reliant la pompe 20 et l'échangeur thermique 30, une quatrième canalisation 32‴ reliant l'échangeur thermique 30 et la motorisation 20 ainsi qu'une deuxième vanne d'arrêt 34' située au niveau de la quatrième canalisation 32‴. La première canalisation 32 comporte un conduit externe 32.2 relié au deuxième contenant 36' par un système de raccordement 40 étanche au gaz. La deuxième canalisation 32' comporte un conduit externe 32.2 relié au premier contenant 36 ainsi qu'au deuxième contenant 36' par des systèmes de raccordement 40 étanches au gaz. La quatrième canalisation 32‴ comporte un conduit externe 32.2 relié au premier contenant 36 par un système de raccordement 40 étanche au gaz. La troisième canalisation 32", intégralement située dans le premier contenant 36, peut ne comprendre qu'un unique conduit interne.

Selon d'autres modes de réalisation visibles sur les figures 4 et 5, le dispositif d'alimentation en hydrogène 26 comprend un premier contenant 36 dans lequel est positionnée au moins une pompe 28, un deuxième contenant 36' dans lequel est positionné au moins un échangeur thermique 30, un troisième contenant 36" dans lequel est positionnée une première vanne d'arrêt 34, une première canalisation 32 reliant le réservoir d'hydrogène 24 et la première vanne d'arrêt 34, une deuxième canalisation 32' reliant la première vanne d'arrêt 34 et la pompe 28, une troisième canalisation 32" reliant la pompe 28 et l'échangeur thermique 30, une quatrième canalisation 32‴ reliant l'échangeur thermique et une deuxième vanne d'arrêt 34' ainsi qu'une cinquième canalisation 32"" reliant la deuxième vanne d'arrêt 34' et la motorisation 20. La première canalisation 32 comporte un conduit externe 32.2 relié au troisième contenant 36" par un système de raccordement 40 étanche au gaz. La deuxième canalisation 32' comporte un conduit externe 32.2 relié au premier contenant 36 ainsi qu'au troisième contenant 36" par des systèmes de raccordement 40 étanches au gaz. La troisième canalisation 32" comporte un conduit externe 32.2 reliant les premier et deuxième contenants 36, 36' par des systèmes de raccordement 40 étanches au gaz. La quatrième canalisation 32‴ comporte un conduit externe 32.2 relié au deuxième contenant 36' par un système de raccordement 40 étanche au gaz. Enfin, la cinquième canalisation 32"" comprend un conduit externe 32.2.

Selon le mode de réalisation visible sur la figure 5, le dispositif d'alimentation en hydrogène 26 comprend une vanne d'arrêt 34" au niveau de chaque système de raccordement 40 reliant un conduit externe d'une canalisation et le premier ou deuxième contenant 36, 36'.

Bien entendu, l'invention n'est pas limitée à ces modes de réalisation pour le dispositif d'alimentation en hydrogène 26.

Quel que soit le mode de réalisation, le dispositif d'alimentation en hydrogène 26 comprend au moins un tronçon 42 qui s'étend entre des première et deuxième extrémités ainsi que des première et deuxième vannes d'arrêt 34, 34' prévues respectivement aux première et deuxième extrémités du tronçon 42 et configurées pour occuper chacune alternativement des états ouvert et fermé. Selon un agencement, le tronçon 42 est positionné dans la zone interne Int de la structure secondaire 22.

Le tronçon 42 comprend au moins une enceinte externe parmi au moins un conduit externe 32.2 et au moins un contenant 36, au moins un élément interne situé dans l'enceinte externe et canalisant l'hydrogène parmi notamment au moins un conduit interne 32.1, au moins une pompe 28, au moins un échangeur thermique 30 et au moins une vanne d'arrêt 34, ainsi qu'au moins une zone intérieure Zi située entre l'élément interne et l'enceinte externe. Les première et deuxième vannes d'arrêt 34, 34' sont configurées pour basculer à l'état fermé lorsque de l'hydrogène est détecté dans la zone intérieure Zi.

Selon le mode de réalisation visible sur la figure 2, le dispositif d'alimentation en hydrogène 26 comprend trois tronçons 42 dont un premier tronçon 42 comportant la première canalisation 32, un deuxième tronçon 42 comportant le contenant 36 dans lequel sont positionnés la pompe 28 et l'échangeur thermique 30 ainsi qu'un troisième tronçon 42 comportant la deuxième canalisation 32'.

Selon le mode de réalisation visible sur la figure 3, le dispositif d'alimentation en hydrogène 26 comprend deux tronçons 42 dont un premier tronçon 42 comportant la première canalisation 32 ainsi qu'un deuxième tronçon 42 comportant le contenant 36 et les deuxième et troisième canalisations 32', 32".

Selon le mode de réalisation visible sur la figure 4, le dispositif d'alimentation en hydrogène 26 comprend trois tronçons 42 dont un premier tronçon 42 comportant la première canalisation 32, un deuxième tronçon 42 comportant les premier et deuxième contenants 36, 36' et les deuxième, troisième et quatrième canalisations, 32', 32", 32‴ ainsi qu'un troisième tronçon 42 comportant la cinquième canalisation 32"". Selon un agencement, le premier tronçon 42 est situé dans le fuselage 12 et/ou la voilure 14. Le deuxième tronçon 42 est situé dans la deuxième zone interne Int2 contenue dans la structure secondaire 22. Le troisième tronçon 42 est situé dans la première zone interne Int1.

Selon le mode de réalisation visible sur la figure 5, le dispositif d'alimentation en hydrogène 26 comprend sept tronçons 42, chacun d'eux comportant une canalisation 32, 32', 32", 32‴, 32"" ou un contenant 36, 36', 36".

Le dispositif d'alimentation en hydrogène 26 comprend au moins un capteur 38 configuré pour détecter une présence d'hydrogène dans au moins une zone intérieure Zi d'au moins un tronçon 42. Ce capteur 38 peut être un capteur d'hydrogène configuré pour détecter une présence d'hydrogène dans la zone intérieure Zi d'au moins un tronçon 42 ou un capteur de pression configuré pour détecter une augmentation de pression dans la zone intérieure Zi d'au moins un tronçon 42 correspondant à une probable fuite d'hydrogène ou un capteur configuré pour détecter l'activation d'un système d'évacuation de la surpression de le tronçon 42. Selon une configuration, le dispositif d'alimentation en hydrogène 26 comprend au moins un capteur 38 pour chaque zone intérieure Zi de chaque tronçon 42.

Le dispositif d'alimentation en hydrogène 26 comprend également au moins une commande 44 configurée pour contrôler l'état des première et deuxième vannes d'arrêt 34, 34', 34" d'au moins un tronçon 42 afin d'isoler ledit tronçon du reste du dispositif d'alimentation en hydrogène 26. Selon une configuration, la commande 44 est configurée pour commander les première et deuxième vannes d'arrêt 34, 34', 34" de tous les tronçons 42.

Selon une particularité, le dispositif d'alimentation en hydrogène 26 comprend au moins un système d'aération 46 configuré pour évacuer, vers la zone externe Ext de la structure secondaire 22, un gaz présent dans au moins une zone intérieure Zi d'au moins un tronçon 42 en cas de détection d'une fuite d'hydrogène dans ladite zone intérieure Zi. Pour la présente demande, on entend par un gaz aussi bien un gaz qu'un mélange de gaz.

Selon un mode de réalisation, le système d'aération 46 comprend au moins un conduit d'aération 48 présentant au moins une entrée 48.1 débouchant dans la zone intérieure Zi d'au moins un tronçon 42 et une sortie 48.2 débouchant dans la zone externe Ext de la structure secondaire 22 via une ouverture 50 qui traverse la structure secondaire 22. Selon une configuration, le système d'aération 46 comprend un conduit d'aération 48 présentant plusieurs entrées 48.1, au moins une pour chaque zone intérieure Zi de chaque tronçon 42, ainsi qu'une sortie 48.2 débouchant dans la zone externe Ext de la structure secondaire 22 via une ouverture 50 qui traverse la structure secondaire 22. Selon un mode de réalisation, l'ouverture 50 est dédiée au système d'aération 46. Selon un autre mode de réalisation, l'ouverture 50 est une ouverture commune au système d'aération 46 et à un autre système de l'ensemble de propulsion 16.

Selon une configuration optionnelle, le système d'aération 46 comprend au moins un extracteur 52, positionné dans le conduit d'aération 48 et configuré pour générer un flux de gaz allant de chaque zone intérieure Zi en direction de la sortie 48.2, favorisant l'extraction du gaz présent dans chaque zone intérieure Zi de chaque tronçon 42. Selon un agencement non limitatif, le système d'aération 46 comprend un seul extracteur 52 positionné au niveau de la sortie 48.2. Bien entendu, d'autres agencements de l'extracteur 52 sont possibles et le système d'aération 46 peut comprendre plusieurs extracteurs 52 positionnés à différents endroits.

Le système d'aération 46 comprend au moins une vanne d'aération 54, 56 configurée pour occuper un état ouvert dans lequel la vanne d'aération 54, 56 permet à un gaz de sortir de la zone intérieure Zi reliée à ladite vanne d'aération 54, 56 et un état fermé dans lequel la vanne d'aération 54, 56 empêche un gaz de sortir de ou de rentrer dans ladite chambre intérieure Zi. Selon un agencement, le système d'aération 46 comprend une vanne d'aération 54, 56 au niveau de chaque entrée 48.1.

Selon une configuration, la vanne d'aération 54 est une vanne d'aération autonome configurée pour changer d'état de manière autonome. Selon cette configuration, la vanne d'aération 54 autonome est une soupape de limitation de pression configurée pour occuper un état fermé lorsque la zone intérieure Zi présente une pression inférieure à un seuil donné et un état ouvert lorsque la zone intérieure Zi présente une pression supérieure ou égale au seuil donné. Selon un mode de fonctionnement, lorsque la vanne d'aération 54 autonome est une soupape de limitation de pression, elle peut assurer, comme le capteur 38, la fonction de détection de fuite d'hydrogène dans la zone intérieure Zi reliée à la vanne d'aération 54, le changement d'état de l'état fermé à l'état ouvert correspondant à la détection d'hydrogène dans la zone intérieure Zi. En effet, la vanne d'aération 54 va détecter une augmentation de pression due à une fuite d'hydrogène dans la zone intérieure Zi et en déduire la présence d'hydrogène dans la zone intérieure Zi.

Selon une autre configuration, la vanne d'aération 56 est une vanne d'aération contrôlable par un élément distant comme la commande 44.

Selon un mode de réalisation, le système d'aération 46 comprend une entrée 48.1 débouchant dans la zone intérieure Zi de chaque canalisation 32 à double peau (située entre le conduits interne 32.1 et le conduit externe 32.2 de ladite canalisation 32), au niveau de laquelle est positionnée une vanne d'aération 54 autonome comme une soupape de limitation de pression, ainsi que des première et deuxième entrées 48.1 débouchant dans la zone intérieure Zi de chaque contenant 36 dans lequel est positionné au moins un élément parmi la pompe 28 et l'échangeur thermique 30, une vanne d'aération 54 autonome comme une soupape de limitation de pression étant positionnée au niveau de la première entrée 48.1, une vanne d'aération 54 contrôlable étant positionnée au niveau de la deuxième entrée 48.1. La vanne d'aération 54 a pour fonction d'évacuer la surpression du contenant 36 de manière automatique. En variante de la vanne d'aération 54, un disque de rupture ("burst disc" en terminologie anglaise) peut être utilisé. Ce disque de rupture est configuré pour ouvrir le passage à une pression prédéterminée en se rompant. Selon une configuration, le système d'aération comporte une vanne d'aération autonome et un disque de rupture configuré pour s'activer en cas de dysfonctionnement de la vanne d'aération autonome.

Selon un mode de réalisation visible sur la figure 5, le dispositif d'alimentation en hydrogène 26 comprend au moins un conduit de surpression 58 qui présente une première extrémité débouchant dans le conduit interne 32.1 d'une des canalisations 32 du dispositif d'alimentation en hydrogène 26, notamment celle sortant de la pompe 28, et une deuxième extrémité débouchant dans le conduit d'aération 48 ainsi qu'une vanne de surpression 60 autonome, comme une soupape de limitation de pression par exemple, positionnée au niveau du conduit de surpression 58 et configurée pour occuper un état passant lorsque l'hydrogène dans le conduit interne 32.1 présente une pression supérieure à un seuil donné ainsi qu'un état bloqué lorsque l'hydrogène dans le conduit interne 32.1 présente une pression inférieure ou égale au seuil donné.

Selon des modes de réalisation visibles sur les figures 2 et 5, le dispositif d'alimentation en hydrogène 26 comprend au moins un système d'injection 62 d'un gaz inerte dans au moins une zone intérieure Zi d'au moins un tronçon 42, notamment dans la zone intérieure Zi d'au moins un contenant 36. Selon un agencement visible sur la figure 5, le système d'injection 62 est configuré pour injecter un gaz inerte dans la zone intérieure Zi de chaque contenant 36. Ce système d'injection 62 favorise l'évacuation de l'hydrogène de la zone Zi de chaque contenant 36 en cas de fuite.

Selon les cas, le gaz inerte peut être de l'hélium ou de l'azote. Bien entendu, l'invention n'est pas limitée à ce type de gaz inerte.

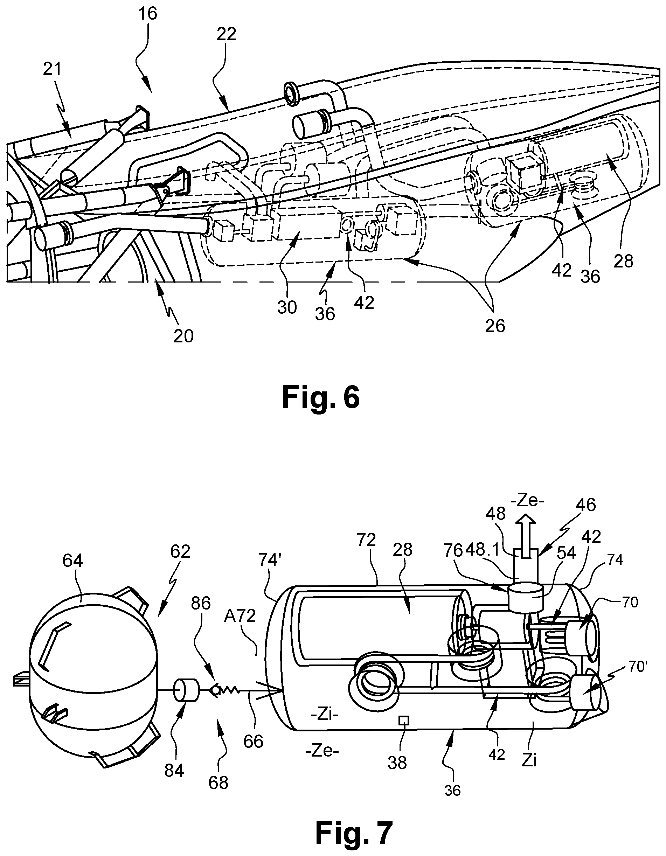

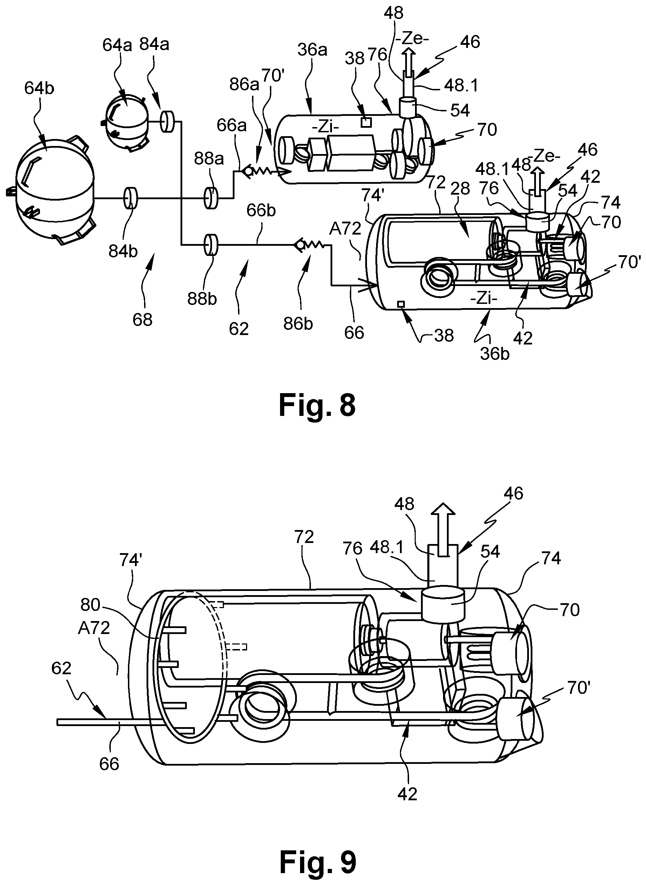

Selon un mode de réalisation, le système d'injection 62 comprend au moins un réservoir de gaz inerte 64 (un seul réservoir de gaz inerte 64 est représenté sur la figure 7 tandis que deux réservoirs de gaz inerte 64 sont représentés sur la figure 8) ainsi qu'au moins un conduit d'injection 66 reliant le réservoir de gaz inerte 64 et une zone intérieure Zi (un seul conduit d'injection 66 est représenté sur la figure 7 tandis que deux conduits d'injection 66 sont représentés sur la figure 8). Un conduit d'injection 66 est configuré pour déboucher dans chaque zone intérieure Zi dans laquelle doit être injecté un gaz inerte.

Selon une configuration, le système d'injection 62 comprend plusieurs réservoirs de gaz inerte 64, chacun d'eux étant relié à chaque zone intérieure Zi dans laquelle doit être injecté un gaz inerte par un conduit d'injection 66.

Selon un mode de réalisation, chaque réservoir de gaz inerte 64 est configuré pour stocker le gaz inerte à l'état pressurisé. Le gaz inerte est stocké dans le réservoir de gaz inerte à une pression supérieure à la pression de la zone intérieure Zi.

Le système d'injection 62 comprend un système de régulation 68 pour contrôler l'écoulement du gaz inerte d'au moins un réservoir de gaz inerte 64 dans au moins un conduit d'injection 66.

Selon une configuration représentée sur la figure 7, le système d'injection 62 comporte un réservoir de gaz inerte 64 et un conduit d'injection 66 permettant de connecter fluidiquement le réservoir de gaz inerte 64 à la zone intérieure Zi. Le système de régulation 68 comporte une vanne pilotée 84 agencée sur le conduit d'injection 66 et configurée pour permettre l'ouverture du réservoir de gaz inerte 64. Plus précisément, la vanne 84 est configurée pour occuper un état fermé en l'absence d'un signal de commande et occuper un état ouvert qui active le système d'injection 62 de gaz inerte depuis le réservoir de gaz inerte 64 vers la zone intérieure Zi à réception d'un signal de commande. La pression dans le réservoir de gaz inerte 64 est suffisamment élevée pour qu'après ouverture de la vanne 84, le gaz inerte se déverse, sans nécessiter de pompe, dans le conduit d'injection 66.

Selon un mode de réalisation, chaque système de régulation 68 comporte également un clapet anti-retour 86 configuré pour occuper un état fermé lorsque la zone intérieure Zi présente une pression supérieure à celle du gaz inerte stocké dans le réservoir de gaz inerte 64 relié à la zone intérieure Zi et un état ouvert lorsque la zone intérieure Zi présente une pression inférieure ou égale à celle du gaz inerte stocké dans le réservoir de gaz inerte 64 relié à la zone intérieure Zi. En effet, en cas de fuite d'hydrogène, après activation de la vanne 84 permettant de déverser le gaz inerte du réservoir de gaz inerte 64 sous pression dans la zone intérieure Zi, la pression dans cette zone intérieure Zi augmente tandis que la pression dans le réservoir de gaz inerte 64 diminue au fur et à mesure que le gaz inerte 64 passe du réservoir de gaz inerte 64 à la zone intérieure Zi. Le clapet anti-retour 86 permet d'éviter que le gaz inerte ne retourne dans le réservoir de gaz inerte 64 une fois les pressions du réservoir de gaz inerte 64 et de la zone intérieure Zi remplie de gaz inerte équilibrées.

Selon une configuration représentée sur la figure 8, le dispositif d'alimentation en hydrogène 26 comprend plusieurs contenants 36a, 36b (dont deux sont représentés sur la figure 8) séparant, de manière étanche au gaz, une zone intérieure Zi et une zone extérieure. Le système d'injection 62 comporte plusieurs réservoirs de gaz inerte 64a, 64b (dont deux sont représentés sur la figure 8) et un conduit d'injection 66a, 66b pour connecter chaque réservoir de gaz inerte 64 à la zone intérieure Zi d'un contenant 36a, 36b. Les conduits d'injection 66a, 66b sont connectés entre eux de manière à ce que chaque réservoir de gaz inerte 64a, 64b soit connecté à la zone intérieure Zi de chaque contenant 36a, 36b. A la sortie de chaque réservoir de gaz inerte 64a, 64b, le système de régulation 68 comporte une vanne pilotée 84a, 84b afin de contrôler l'ouverture dudit réservoir de gaz inerte 64a, 64b. Sur chaque conduit d'injection 66a, 66b, le système de régulation 68 comporte une vanne pilotée 88a, 88b afin de contrôler le remplissage du contenant 36a, 36b par du gaz inerte.

En cas de fuite d'hydrogène détectée dans le contenant 36a, un signal de commande va être envoyé à la vanne 88a afin de la passer de son état fermé à son état ouvert tandis que la vanne 88b va rester dans son état fermé de manière à ce que le contenant 36b ne soit pas rempli de gaz inerte. Ensuite, un signal de commande va être envoyé à la vanne 84b afin de la passer de son état fermé à son état ouvert pour que le gaz inerte du réservoir de gaz inerte 64b vienne remplir le contenant 36a tandis que la vanne 84a va rester dans son état fermé. En alternative, un signal de commande peut également être envoyé à la vanne 84a afin de la passer de son état fermé à son état ouvert pour que le gaz inerte du réservoir de gaz inerte 64b vienne également remplir le contenant 36a.

Le système de régulation 68 comporte également un clapet anti-retour 86a, 86b agencé sur chaque conduit d'injection 66a, 66b et configuré pour occuper un état fermé lorsque la zone intérieure Zi du contenant 36a, 36b présente une pression supérieure à celle du gaz inerte stocké dans l'un des réservoirs de gaz inerte 64a, 64b qui est fluidiquement connecté à la zone intérieure Zi dudit contenant 36a, 36b et un état ouvert lorsque la zone intérieure Zi dudit contenant 36a, 36b présente une pression inférieure ou égale à celle du gaz inerte stocké dans l'un des réservoirs de gaz inerte 64a, 64b fluidiquement connecté à ladite zone intérieure Zi. En effet, en cas de fuite d'hydrogène, le clapet anti-retour 86a, 86b permet d'éviter que le gaz inerte ne retourne dans le réservoir de gaz inerte 64a, 64b une fois les pressions du réservoir de gaz inerte 64a, 64b et de la zone intérieure Zi remplie de gaz inerte équilibrées.

Selon une configuration non représentée, le dispositif d'alimentation en hydrogène 26 comprend plusieurs contenants 36a, 36b, séparant de manière étanche au gaz, une zone intérieure Zi et une zone extérieure et le système d'injection 62 comporte un seul réservoir de gaz inerte 64 et un conduit d'injection 66a, 66b pour connecter le réservoir de gaz inerte 64 à la zone intérieure Zi de chaque contenant 36a, 36b. Les conduits d'injection 66a, 66b sont connectés entre eux de manière à ce que le réservoir de gaz inerte 64 soit connecté à la zone intérieure Zi de chaque contenant 36a, 36b. Sur chaque conduit d'injection 66a, 66b, le système de régulation 68 comporte une vanne pilotée 88a, 88b afin d'activer et de contrôler le remplissage du contenant 36a, 36b par du gaz inerte. En cas de fuite d'hydrogène détectée dans le contenant 36a, un signal de commande est envoyé à la vanne 88a afin de la passer de son état fermé à son état ouvert, ce qui va permettre l'ouverture du réservoir de gaz inerte 64 et le remplissage du contenant 36a par le gaz inerte tandis que la vanne 88b reste dans son état fermé de manière à ce que le contenant 36b ne soit pas rempli de gaz inerte.

Selon une configuration non représentée, le dispositif d'alimentation en hydrogène 26 comprend un seul contenant 36 séparant, de manière étanche au gaz, une zone intérieure Zi et une zone extérieure et le système d'injection 62 comporte plusieurs réservoirs de gaz inerte 64a, 64b et un conduit d'injection 66 pour connecter les réservoirs de gaz inerte 64a, 64b à la zone intérieure Zi dudit contenant 36. A la sortie de chaque réservoir de gaz inerte 64a, 64b, le système de régulation 68 comporte une vanne pilotée 84a, 84b afin de contrôler l'ouverture dudit réservoir de gaz inerte 64a, 64b. En cas de fuite d'hydrogène détectée dans le contenant 36, un signal de commande est envoyé à l'une des vannes 88a, 88b afin de la passer de son état fermé à son état ouvert tandis que l'autre des vannes 88a, 88b reste dans son état fermé. Selon un mode de réalisation visible sur la figure 6, l'ensemble de propulsion 16 comprend, entre la motorisation 20 et la structure secondaire 22, plusieurs contenants 36 dans chacun desquels est positionné un tronçon 42 du dispositif d'alimentation en hydrogène 26, ledit tronçon 42 comportant au moins un élément interne parmi notamment au moins une pompe 28 et au moins un échangeur thermique 30.

Comme illustré sur la figure 7, chaque contenant 36 comprend des raccordements d'entrée et de sortie 70, 70' pour relier le tronçon 42 aux autres tronçons du dispositif d'alimentation en hydrogène 26, chacun des raccordements d'entrée et de sortie 70, 70' comportant une vanne d'arrêt 34, 34', 34".

Selon un mode de réalisation, chaque contenant 36 comporte un corps tubulaire cylindrique 72 qui présente un axe de révolution A72 et s'étend entre des première et deuxième extrémités ainsi que des premier et deuxième dômes 74, 74' demi-sphériques obturant, de manière étanche, les première et deuxième extrémités du corps tubulaire cylindrique 72.

Selon un agencement, les raccordements d'entrée et de sortie 70, 70' sont positionnés au niveau du premier dôme 74. Selon un autre agencement, le raccordement d'entrée 70 est positionné au niveau du premier dôme 74 et le deuxième raccordement de sortie 70' est positionné au niveau du deuxième dôme 74'.

Selon un mode de réalisation, chaque contenant 36 comprend au moins une sortie 76, positionnée au niveau du corps tubulaire cylindrique 72, pour relier la zone intérieure Zi du contenant 36 à un conduit d'aération 48, une vanne d'aération 54, 56 étant positionnée au niveau de la sortie 76. Selon une configuration, chaque contenant 36 comprend une première sortie 76 au niveau de laquelle est positionnée une vanne d'aération 54 autonome, comme une soupape de limitation de pression par exemple, ainsi qu'une deuxième sortie 76 au niveau de laquelle est positionnée une vanne d'aération 56 contrôlable.

Selon une configuration visible sur la figure 9, le système d'injection 62 comprend au moins un diffuseur 78 positionné dans le contenant 36, relié à au moins un réservoir de gaz inerte 64 et configuré pour générer un flux tourbillonnant dans le contenant 36. Selon un mode de réalisation, le diffuseur 78 comprend un tube annulaire 80 relié à au moins un réservoir de gaz inerte 64 ainsi que plusieurs injecteurs 82 répartis sur la circonférence du tube annulaire 80. Le tube annulaire 80 présente un axe de révolution A80.

Selon un agencement, le tube annulaire 80 est sensiblement coaxial au corps tubulaire cylindrique 72 du contenant 36.

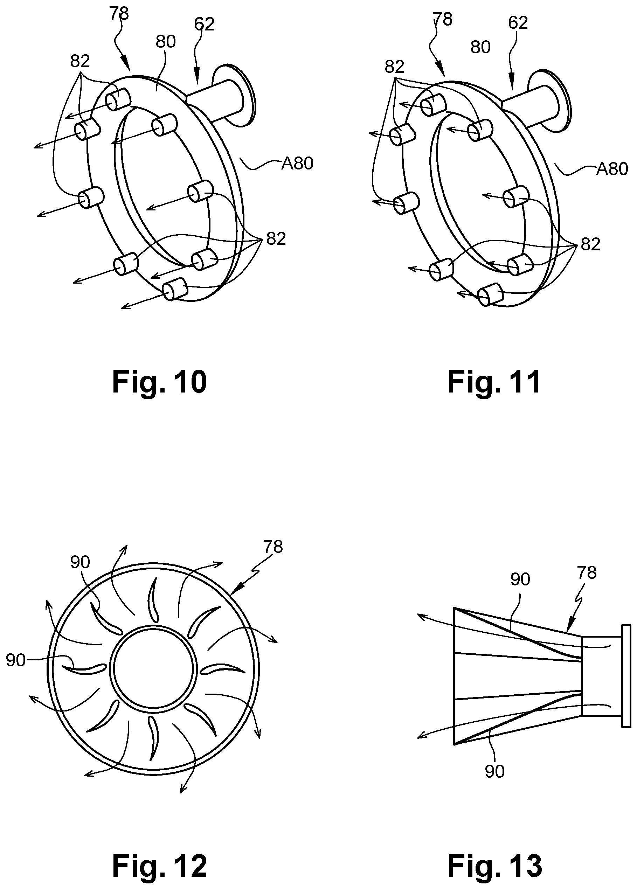

Selon une première variante visible sur la figure 10, les injecteurs 82 sont configurés pour injecter le gaz inerte selon une direction parallèle à l'axe de révolution A80 du tube annulaire 80.

Selon une deuxième variante visible sur la figure 11, les injecteurs 82 sont configurés pour injecter le gaz inerte selon des directions formant un angle donné avec l'axe de révolution A80 du tube annulaire 80. Selon cette deuxième variante, les flux de gaz inerte sortant des injecteurs 82 tourbillonnent autour de l'axe de révolution A80 à l'intérieur du contenant 36, ce qui contribue à améliorer l'évacuation de l'hydrogène en cas de fuite.

Selon une configuration visible sur les figures 12 et 13, le diffuseur 78 comporte un corps, de forme générale conique, à l'intérieur duquel sont agencées des ailettes 90 réparties sur la circonférence du corps de manière à former une turbine pour diffuser le gaz inerte dans le contenant 36 en créant un tourbillon. Plus précisément, le gaz inerte provenant du réservoir de gaz inerte 64, via le conduit d'injection 66, traverse le diffuseur 78 en étant dévié par les ailettes 90 et pénètre en tourbillonnant dans le contenant 36. Bien entendu, l'invention n'est pas limitée à ces modes de réalisation pour le système d'injection 62 de gaz inerte.

Le principe de fonctionnement du dispositif d'alimentation en hydrogène 26 est le suivant : Une fuite au niveau d'une zone intérieure Zi d'un tronçon 42 provoque une diminution du niveau de vide et une augmentation de la pression dans cette zone intérieure Zi. La vitesse de diminution du niveau de vide ou d'augmentation de la pression dépend de l'importance de la fuite et/ou du volume de la zone intérieure Zi.

Dès que la pression dans la zone intérieure Zi atteint un seuil donné, cela provoque, de manière automatique et autonome, un changement d'état de chaque vanne d'aération 54 autonome (comme une soupape de limitation de pression par exemple) communiquant avec ladite zone intérieure Zi qui passe à l'état ouvert. Par conséquent, le gaz présent dans la zone intérieure Zi est évacué vers la zone externe Ext de la structure secondaire 22. Cette évacuation de l'hydrogène présent dans la zone intérieure Zi permet de réduire la pression et la concentration d'hydrogène dans cette zone intérieure Zi ainsi que de réduire la pression jusqu'à obtention d'une pression stabilisée inférieure ou égale à la pression d'ouverture de la vanne d'aération 54.

En parallèle ou en complément, la présence d'hydrogène dans la zone intérieure Zi d'un tronçon 42 est détectée par le capteur 38 qui transmet un signal à la commande 44, ou en raison du passage à l'état ouvert de la vanne d'aération 54 autonome, un signal étant transmis à la commande 44. A réception de ce signal, la commande 44 provoque un changement d'état d'au moins une vanne d'aération 56 contrôlable communiquant avec ladite zone intérieure Zi, la commutant à l'état ouvert. Par conséquent, le gaz présent dans la zone intérieure Zi est évacué vers la zone externe Ext de la structure secondaire 22.

Dès la détection d'hydrogène dans une zone intérieure Zi d'un tronçon 42 par le capteur 38 ou en raison du passage à l'état ouvert de la vanne d'aération 54 autonome, la commande 44 provoque un changement d'état des vannes d'arrêt 34, 34', 34" prévues à chaque extrémité du tronçon 42, qui passent à l'état fermé de manière à isoler le tronçon 42 et à ne plus l'alimenter en hydrogène.

Après la fermeture des vannes d'arrêt 34, 34', 34", l'hydrogène n'alimentant plus l'intérieur de la zone intérieure Zi et la vanne d'aération 54 évacuant l'hydrogène de ladite zone intérieure Zi, la pression dans cette zone intérieure Zi diminue jusqu'à passer en dessous de la pression d'ouverture de la vanne d'aération 54. La vanne d'aération 54 autonome va automatiquement changer d'état de la position ouverte à la position fermée, ce qui transmet un signal à la commande 44. Après une temporisation, par exemple de dix secondes, la vanne d'aération 54 est réactivée manuellement, c'est-à-dire que la vanne d'aération 54 est forcée de passer de sa position fermée à sa position ouverte. A réception du signal, la commande 44 provoque ensuite un changement d'état d'au moins une vanne 88a, 88b de manière à activer le système d'injection 62 de gaz inerte et donc à autoriser le gaz inerte à pénétrer dans le contenant 36. Ensuite, la commande 44 provoque un changement d'état d'au moins une vanne 84a, 84b de manière à libérer le gaz inerte du réservoir de gaz inerte 64. Cette injection de gaz inerte dans la zone intérieure Zi favorise l'évacuation de l'hydrogène vers la zone externe Ext de la structure secondaire 22.

L'extraction de l'hydrogène présent dans la zone intérieure Zi peut être renforcée en activant l'extracteur 52.

Comme pour l'art antérieur, le dispositif d'alimentation en hydrogène 26 est configuré pour isoler un tronçon 42 du reste du dispositif d'alimentation en hydrogène 26 dès la détection d'une première fuite d'hydrogène au niveau dudit tronçon 42 afin de ne plus l'alimenter en hydrogène grâce aux vannes d'arrêt prévues aux extrémités du tronçon 42. Cette configuration permet de limiter la quantité d'hydrogène présent dans la zone intérieure Zi en cas de fuite.

Par rapport à l'art antérieur, le dispositif d'alimentation en hydrogène 26 est configuré pour évacuer l'hydrogène présent dans la zone intérieure Zi grâce au système d'aération 46 afin de réduire la pression et la concentration d'hydrogène dans la zone intérieure Zi. Par conséquent, même si le contenant 36 ou le conduit externe 32.2 délimitant la zone intérieure Zi dans laquelle l'hydrogène a fui en raison de la première fuite n'est plus étanche et fuit, les risques d'incidents en raison d'une deuxième fuite d'hydrogène dans la zone interne Int de la structure secondaire 22 sont quasi nuls.

Selon un mode de réalisation privilégié, le dispositif d'alimentation en hydrogène 26 est configuré pour favoriser l'évacuation de l'hydrogène vers la zone externe Ext de la structure secondaire 22 en injectant un gaz inerte dans la zone intérieure Zi grâce au système d'injection 62. Cette configuration permet de réduire encore plus la concentration d'hydrogène dans la zone intérieure Zi. Par conséquent, même si le contenant 36 ou le conduit externe 32.2 délimitant la zone intérieure Zi dans laquelle l'hydrogène a fui en raison de la première fuite n'est plus étanche et fuit, les risques d'incidents en raison d'une deuxième fuite d'hydrogène dans la zone interne Int de la structure secondaire 22 sont encore plus réduits.

## Revendications

1. Aéronef comprenant:
- au moins une structure secondaire (22) séparant une zone interne (Int) et une zone externe (Ext),
- au moins une motorisation (20) utilisant de l'hydrogène située dans la zone interne (Int) de la structure secondaire (22),
- au moins un réservoir d'hydrogène (24), et
- au moins un dispositif d'alimentation en hydrogène (26) reliant le réservoir d'hydrogène (24) et la motorisation (20),
le dispositif d'alimentation en hydrogène (26) comprenant :
- au moins un tronçon (42) comportant au moins une enceinte externe parmi au moins un conduit externe (32.2) et au moins un contenant (36),
- des première et deuxième vannes d'arrêt (34, 34') configurées pour isoler ledit tronçon (42) en cas de fuite,
- au moins un élément interne situé dans l'enceinte externe et canalisant l'hydrogène parmi notamment au moins un conduit interne (32.1), au moins une pompe (28), au moins un échangeur thermique (30) et au moins une vanne d'arrêt (34), au moins une zone intérieure (Zi) étant située entre l'élément interne et l'enceinte externe,
- au moins un système d'aération (46) configuré pour évacuer un gaz présent dans la zone intérieure (Zi) vers la zone externe (Ext) de la structure secondaire (22),
- le contenant (36) délimitant la zone intérieure (Zi) et comportant un corps tubulaire cylindrique (72), et
- au moins un système d'injection (62) d'un gaz inerte dans la zone intérieure (Zi) comprenant au moins:
o un réservoir de gaz inerte (64),
o un conduit d'injection (66) reliant le réservoir de gaz inerte (64) et la zone intérieure (Zi),
o un système de régulation (68) pour contrôler un écoulement du gaz inerte dans le conduit d'injection (66), et
o un diffuseur (78) relié au réservoir de gaz inerte (64), positionné dans le contenant (36) et sensiblement coaxial au corps tubulaire cylindrique (72).

2. Aéronef selon la revendication précédente, **caractérisé en ce que** le système d'aération (46) comprend au moins un conduit d'aération (48) qui présente au moins une entrée (48.1) débouchant dans la zone intérieure (Zi) et une sortie (48.2) débouchant dans la zone externe (Ext) de la structure secondaire (22) ainsi qu'au moins une vanne d'aération (54, 56) configurée pour occuper un état ouvert dans lequel la vanne d'aération (54, 56) permet à un gaz de sortir de la zone intérieure (Zi) et un état fermé dans lequel la vanne d'aération (54, 56) empêche un gaz de sortir de ladite chambre intérieure (Zi).

3. Aéronef selon la revendication précédente, **caractérisé en ce que** la vanne d'aération (54) est une vanne d'aération autonome configurée pour changer d'état de manière autonome et occuper un état fermé lorsque la zone intérieure (Zi) présente une pression inférieure à un seuil donné et un état ouvert lorsque la zone intérieure (Zi) présente une pression supérieure ou égale au seuil donné.

4. Aéronef selon l'une des revendications 2 à 3, **caractérisé en ce que** la vanne d'aération (56) est une vanne d'aération contrôlable par un élément distant.

5. Aéronef selon la revendication précédente, **caractérisé en ce que** le dispositif d'alimentation en hydrogène (26) comprend au moins une canalisation à double peau comportant un conduit interne (32.1), un conduit externe (32.2) positionné autour du conduit interne (32.1) et une zone intérieure (Zi) située entre les conduits interne et externe (32.1, 32.2) ainsi qu'au moins un contenant (36) délimitant une zone intérieure (Zi) et dans lequel est positionné au moins un élément interne et **en ce que** le système d'aération (46) comprend une entrée (48.1) débouchant dans la zone intérieure (Zi) de chaque canalisation (32) à double peau, au niveau de laquelle est positionnée une vanne d'aération (54) autonome, ainsi que des première et deuxième entrées (48.1) débouchant dans la zone intérieure (Zi) de chaque contenant (36), une vanne d'aération (54) autonome étant positionnée au niveau de la première entrée (48.1), une vanne d'aération (54) contrôlable étant positionnée au niveau de la deuxième entrée (48.1).

6. Aéronef selon l'une des revendications 2 à 5, **caractérisé en ce que** le système d'aération (46) comprend au moins un extracteur (52) positionné dans le conduit d'aération (48) et configuré pour générer un flux de gaz en direction de la sortie (48.2).

7. Aéronef selon l'une des revendications précédentes, **caractérisé en ce que** le système de régulation (68) comporte au moins une vanne (84, 88) pilotée agencée sur le conduit d'injection (66) et configurée pour autoriser l'écoulement du gaz inerte dans le conduit d'injection (66) depuis le réservoir de gaz inerte (64).

8. Aéronef selon l'une des revendications précédentes, **caractérisé en ce que** le diffuseur (78) comporte un tube annulaire (80) relié au réservoir de gaz inerte (64), positionné dans le contenant (36) et sensiblement coaxial au corps tubulaire cylindrique (72), ainsi que plusieurs injecteurs (82) répartis sur la circonférence du tube annulaire (80).

9. Aéronef selon la revendication précédente, **caractérisé en ce que** le tube annulaire (80) présente un axe de révolution (A80) et **en ce que** les injecteurs (82) sont configurés pour injecter le gaz inerte selon des directions formant un angle donné avec l'axe de révolution (A80) du tube annulaire (80) de manière à obtenir un flux tourbillonnant autour de l'axe de révolution (A80) du tube annulaire (80), à l'intérieur du contenant (36).

10. Aéronef selon la revendication 8, **caractérisé en ce que** le tube annulaire (80) présente un axe de révolution (A80) et **en ce que** les injecteurs (82) sont configurés pour injecter le gaz inerte selon une direction parallèle à l'axe de révolution (A80) du tube annulaire (80).

11. Aéronef selon l'une des revendications 1 à 7, **caractérisé en ce que** le diffuseur (78) comporte un corps de forme générale conique relié au réservoir de gaz inerte (64), positionné dans le contenant (36) et sensiblement coaxial au corps tubulaire cylindrique (72), ainsi que plusieurs ailettes (90) réparties sur la circonférence du corps.

12. Aéronef selon l'une des revendications 2 à 11, **caractérisé en ce que** le dispositif d'alimentation en hydrogène (26) comprend au moins un conduit de surpression (58), qui présente une première extrémité débouchant dans un conduit interne (32.1) canalisant l'hydrogène et une deuxième extrémité débouchant dans le conduit d'aération (48), ainsi qu'une vanne de surpression (60) positionnée au niveau du conduit de surpression (58) et configurée pour occuper un état bloqué lorsque l'hydrogène dans le conduit interne (32.1) présente une pression inférieure ou égale au seuil donné ainsi qu'un état passant lorsque l'hydrogène dans le conduit interne (32.1) présente une pression supérieure à un seuil donné.

## Patentansprüche

1. Luftfahrzeug mit:
- wenigstens einer Sekundärstruktur (22), die einen inneren Bereich (Int) und einen äußeren Bereich (Ext) voneinander trennt,
- wenigstens einem wasserstoffbetriebenen Antrieb (20), der sich im inneren Bereich (Int) der Sekundärstruktur (22) befindet,
- wenigstens einem Wasserstoffreservoir (24) und
- wenigstens einer Wasserstoffzufuhrvorrichtung (26), die den Wasserstofftank (24) und den Antrieb (20) miteinander verbindet,
wobei die Wasserstoffzufuhrvorrichtung (26) umfasst:
- wenigstens einen Abschnitt (42) mit wenigstens einer äußeren Umhüllung aus wenigstens einem äußeren Kanal (32.2) und wenigstens einem Behälter (36),
- ein erstes und ein zweites Absperrventil (34, 34'), die so eingerichtet sind, dass sie den Abschnitt (42) im Falle eines Lecks absperren,
- wenigstens ein inneres Element, das sich in der äußeren Umhüllung befindet und den Wasserstoff kanalisiert, darunter insbesondere wenigstens eine innere Leitung (32.1), wenigstens eine Pumpe (28), wenigstens einen Wärmetauscher (30) und wenigstens ein **Ab**sperrventil (34), wobei sich wenigstens ein Innenbereich (Zi) zwischen dem inneren Element und der äußeren Umhüllung befindet,
- wenigstens ein Belüftungssystem (46), das so eingerichtet ist, dass es ein im Innenbereich (Zi) vorhandenes Gas in den äußeren Bereich (Ext) der Sekundärstruktur (22) abführt,
- wobei der Behälter (36) den Innenbereich (Zi) begrenzt und einen zylindrischen rohrförmigen Körper (72) aufweist, und
- wenigstens ein Injektionssystem (62) für ein Inertgas in den inneren Bereich (Zi), das wenigstens umfasst:
o ein Inertgasreservoir (64),
o eine Injektionsleitung (66), die das Inertgasreservoir (64) und den Innenbereich (Zi) verbindet,
o ein Regelsystem (68) zur Steuerung einer Strömung des Inertgases in der Injektionsleitung (66), und
o einen Diffusor (78), der mit dem Inertgasreservoir (64) verbunden ist, in dem Behälter (36) angeordnet ist und im Wesentlichen koaxial zu dem zylindrischen rohrförmigen Körper (72) verläuft.

2. Luftfahrzeug nach dem vorhergehenden Anspruch, **dadurch gekennzeichnet, dass** das Belüftungssystem (46) wenigstens eine Belüftungsleitung (48) umfasst, die wenigstens einen Einlass (48.1), der in den Innenbereich (Zi) mündet, und einen Auslass (48.2), der in den äußeren Bereich (Ext) der Sekundärstruktur (22) mündet, sowie wenigstens ein Belüftungsventil (54, 56) aufweist, das so eingerichtet ist, dass es einen offenen Zustand einnimmt, in dem das Belüftungsventil (54, 56) es einem Gas ermöglicht, aus dem Innenbereich (Zi) auszutreten, und einen geschlossenen Zustand einnimmt, in dem das Belüftungsventil (54, 56) ein Gas daran hindert, aus der genannten Innenkammer (Zi) auszutreten.

3. Luftfahrzeug nach dem vorhergehenden Anspruch, **dadurch gekennzeichnet, dass** das Belüftungsventil (54) ein selbsttätiges Belüftungsventil ist, das so eingerichtet ist, dass es seinen Zustand selbsttätig ändert und einen geschlossenen Zustand einnimmt, wenn der Innenbereich (Zi) einen Druck unterhalb eines gegebenen Schwellenwerts aufweist, und einen offenen Zustand einnimmt, wenn der Innenbereich (Zi) einen Druck oberhalb oder gleich dem gegebenen Schwellenwert aufweist.

4. Luftfahrzeug nach einem der Ansprüche 2 bis 3, **dadurch gekennzeichnet, dass** das Belüftungsventil (56) ein Belüftungsventil ist, das von einem entfernten Element steuerbar ist.

5. Luftfahrzeug nach dem vorhergehenden Anspruch, **dadurch gekennzeichnet, dass** die Wasserstoffzufuhrvorrichtung (26) wenigstens eine doppelwandige Leitung aufweist, die eine innere Leitung (32.1), eine äußere Leitung (32.2), die um die innere Leitung (32.1) angeordnet ist, und einen Innenbereich (Zi) umfasst, der sich zwischen der inneren und der äußeren Leitung (32.1, 32.2) befindet, sowie wenigstens einen Behälter (36), der einen Innenbereich (Zi) begrenzt und in dem wenigstens ein inneres Element angeordnet ist, und dass das Belüftungssystem (46) einen Eingang (48.1) aufweist, der in den Innenbereich (Zi) jeder doppelwandigen Rohrleitung (32) mündet, in dessen Bereich ein autonomes Belüftungsventil (54) angeordnet ist, sowie einen ersten und einen zweiten Eingang (48.1), die in den Innenbereich (Zi) jedes Behälters (36) münden, wobei ein selbsttätiges Belüftungsventil (54) im Bereich des ersten Eingangs (48.1) angeordnet ist und ein steuerbares Belüftungsventil (54) im Bereich des zweiten Eingangs (48.1) angeordnet ist.

6. Luftfahrzeug nach einem der Ansprüche 2 bis 5, **dadurch gekennzeichnet, dass** das Belüftungssystem (46) wenigstens eine Absauge (52) aufweist, die in der Belüftungsleitung (48) angeordnet und so eingerichtet ist, dass sie einen Gasstrom in Richtung des Auslasses (48.2) erzeugt.

7. Luftfahrzeug nach einem der vorhergehenden Ansprüche, **dadurch gekennzeichnet, dass** das Regelsystem (68) wenigstens ein gesteuertes Ventil (84, 88) umfasst, das an der Injektionsleitung (66) angeordnet und so eingerichtet ist, dass es den Fluss des Inertgases aus dem Inertgasreservoir (64) in die Injektionsleitung (66) zulässt.

8. Luftfahrzeug nach einem der vorhergehenden Ansprüche, **dadurch gekennzeichnet, dass** der Diffusor (78) ein ringförmiges Rohr (80) aufweist, das mit dem Inertgasreservoir (64) verbunden ist, in dem Behälter (36) und im Wesentlichen koaxial zu dem zylindrischen rohrförmigen Körper (72) angeordnet ist, sowie mehrere Injektoren (82) aufweist, die über den Umfang des ringförmigen Rohrs (80) verteilt sind.

9. Luftfahrzeug nach dem vorhergehenden Anspruch, **dadurch gekennzeichnet, dass** das ringförmige Rohr (80) eine Rotationsachse (A80) aufweist und dass die Injektoren (82) so eingerichtet sind, dass sie das Inertgas in Richtungen injizieren, die einen gegebenen Winkel mit der Rotationsachse (A80) des ringförmigen Rohrs (80) bilden, so dass im Inneren des Behälters (36) eine Wirbelströmung um die Rotationsachse (A80) des ringförmigen Rohrs (80) entsteht.

10. Luftfahrzeug nach Anspruch 8, **dadurch gekennzeichnet, dass** das ringförmige Rohr (80) eine Rotationsachse (A80) aufweist und dass die Injektoren (82) so eingerichtet sind, dass sie das Inertgas in eine Richtung parallel zur Rotationsachse (A80) des ringförmigen Rohrs (80) injizieren.

11. Luftfahrzeug nach einem der Ansprüche 1 bis 7, **dadurch gekennzeichnet, dass** der Diffusor (78) einen allgemein konisch geformten Körper aufweist, der mit dem Inertgasreservoir (64) verbunden ist, in dem Behälter (36) und im Wesentlichen koaxial zu dem zylindrischen rohrförmigen Körper (72) angeordnet ist sowie mehrere Lamellen (90) aufweist, die über den Umfang des Körpers verteilt sind.

12. Luftfahrzeug nach einem der Ansprüche 2 bis 11, **dadurch gekennzeichnet, dass** die Wasserstoffzufuhrvorrichtung (26) wenigstens eine Überdruckleitung (58) umfasst, die ein erstes Ende aufweist, das in eine innere Leitung (32.1) mündet, die den Wasserstoff kanalisiert, und ein zweites Ende, das in die Belüftungsleitung (48) mündet, sowie ein Überdruckventil (60), das im Bereich der Überdruckleitung (58) angeordnet und so eingerichtet ist, dass es einen gesperrten Zustand einnimmt, wenn der Wasserstoff in der inneren Leitung (32.1) einen Druck aufweist, der kleiner oder gleich einem gegebenen Schwellenwert ist, sowie einen durchlässigen Zustand, wenn der Wasserstoff in der inneren Leitung (32.1) einen Druck aufweist, der größer als ein gegebener Schwellenwert ist.

## Claims

1. Aircraft comprising:
- at least one secondary structure (22) separating an inner zone (Int) from an outer zone (Ext),
- at least one motor (20) that uses the hydrogen located in the inner zone (Int) of the secondary structure (22),
- at least one hydrogen tank (24), and
- at least one hydrogen supplying device (26) connecting the hydrogen tank (24) and the motor (20),
the hydrogen supplying device (26) comprising:
- at least one portion (42) having at least one outer enclosure that is at least one outer pipe (32.2) or at least one vessel (36),
- first and second shut-off valves (34, 34') configured to isolate said portion (42) in the event of a leak,
- at least one inner element, located in the outer enclosure and carrying the hydrogen, that is notably at least one inner pipe (32.1), at least one pump (28), at least one heat exchanger (30) or at least one shut-off valve (34), at least one interior zone (Zi) being located between the inner element and the outer enclosure,
- at least one ventilation system (46) configured to vent a gas present in the inner zone (Zi) toward the outer zone (Ext) of the secondary structure (22),
- the vessel (36) delimiting the interior zone (Zi) and having a cylindrical tubular body (72), and
- at least one injection system (62) for injecting an inert gas into the interior zone (Zi), comprising at least:
∘ one inert gas tank (64),
∘ one injection pipe (66) connecting the inert gas tank (64) and the interior zone (Zi),
o one regulation system (68) for controlling a flow of the inert gas in the injection pipe (66), and
∘ one diffuser (78) which is connected to the inert gas tank (64), is positioned in the vessel (36) and is substantially coaxial with the cylindrical tubular body (72).

2. Aircraft as claimed in the preceding claim, wherein the ventilation system (46) comprises at least one ventilation pipe (48) which has at least one inlet (48.1) leading into the interior zone (Zi) and an outlet (48.2) leading into the outer zone (Ext) of the secondary structure (22), and at least one ventilation valve (54, 56) configured to occupy an open state, in which the ventilation valve (54, 56) allows a gas to leave the interior zone (Zi), and a closed state, in which the ventilation valve (54, 56) prevents a gas from leaving said interior chamber (Zi).

3. Aircraft as claimed in the preceding claim, wherein the ventilation valve (54) is an autonomous ventilation valve configured to change state autonomously and occupy a closed state when the interior zone (Zi) exhibits a pressure less than a given threshold and an open state when the interior zone (Zi) exhibits a pressure greater than or equal to the given threshold.

4. Aircraft as claimed in either of claims 2 and 3, wherein the ventilation valve (56) is a ventilation valve that can be controlled by a remote element.

5. Aircraft as claimed in the preceding claim, wherein the hydrogen supplying device (26) comprises at least one double-wall pipeline having an inner pipe (32.1), an outer pipe (32.2) positioned around the inner pipe (32.1) and an interior zone (Zi) located between the inner and outer pipes (32.1, 32.2), and at least one vessel (36) which delimits an interior zone (Zi) and in which is positioned at least one inner element, and wherein the ventilation system (46) comprises an inlet (48.1), which leads into the interior zone (Zi) of each double-wall pipeline (32) and at which an autonomous ventilation valve (54) is positioned, and first and second inlets (48.1) leading into the interior zone (Zi) of each vessel (36), an autonomous ventilation valve (54) being positioned at the first inlet (48.1), a controllable ventilation valve (54) being positioned at the second inlet (48.1).

6. Aircraft as claimed in one of claims 2 to 5, wherein the ventilation system (46) comprises at least one extractor (52) positioned in the ventilation pipe (48) and configured to generate a stream of gas toward the outlet (48.2).

7. Aircraft as claimed in one of the preceding claims, wherein the regulation system (68) has at least one controlled valve (84, 88) arranged on the injection circuit (66) and configured to permit the flow of inert gas into the injection pipe (66) from the inert gas tank (64).

8. Aircraft as claimed in one of the preceding claims, wherein the diffuser (78) has an annular tube (80), which is connected to the inert gas tank (64), is positioned in the vessel (36) and is substantially coaxial with the cylindrical tubular body (72), and also multiple injectors (82) distributed around the circumference of the annular tube (80).

9. Aircraft as claimed in the preceding claim, wherein the annular tube (80) has an axis of revolution (A80) and wherein the injectors (82) are configured to inject the inert gas along directions forming a given angle with the axis of revolution (A80) of the annular tube (80) so as to obtain a stream swirling around the axis of revolution (A80) of the annular tube (80), inside the vessel (36).

10. Aircraft as claimed in claim 8, wherein the annular tube (80) has an axis of revolution (A80) and wherein the injectors (82) are configured to inject the inert gas along a direction parallel to the axis of revolution (A80) of the annular tube (80).

11. Aircraft as claimed in one of claims 1 to 7, wherein the diffuser (78) has a body of conical overall shape, which is connected to the inert gas tank (64), is positioned in the vessel (36) and is substantially coaxial with the cylindrical tubular body (72), and also multiple fins (90) distributed around the circumference of the body.

12. Aircraft as claimed in one of claims 2 to 11, wherein the hydrogen supplying device (26) comprises at least one pressure relief pipe (58), which has a first end leading into an inner pipe (32.1) that carries the hydrogen and a second end leading into the ventilation pipe (48), and a pressure relief valve (60) positioned at the pressure relief pipe (58) and configured to occupy a closed state when the hydrogen in the inner pipe (32.1) exhibits a pressure less than or equal to the given threshold and an open state when the hydrogen in the inner pipe (32.1) exhibits a pressure greater than a given threshold.
